**Europäisches Patentamt**

**European Patent Office**

**Office européen des brevets**

(19)

(11) Veröffentlichungsnummer: **0 025 175**
**B1**

(12)

# EUROPÄISCHE PATENTSCHRIFT

(45) Veröffentlichungstag der Patentschrift:
27.08.86

(51) Int. Cl.⁴: **G 01 C 3/08**, G 03 B 13/20

(21) Anmeldenummer: **80105068.3**

(22) Anmeldetag: **26.08.80**

(54) **Mit einem Belichtungsmessteil versehene Schaltung zur sensorgesteuerten Entfernungsmessung.**

(30) Priorität: **10.09.79 DE 2936491**

(43) Veröffentlichungstag der Anmeldung:
**18.03.81 Patentblatt 81/11**

(45) Bekanntmachung des Hinweises auf die Patenterteilung:
**27.08.86 Patentblatt 86/35**

(84) Benannte Vertragsstaaten:
**BE FR GB IT NL**

(56) Entgegenhaltungen:
**DE - A - 2 447 299**
**DE - A - 2 800 448**
**DE - A - 2 810 501**
**DE - B - 2 810 806**
**GB - A - 1 263 080**

(73) Patentinhaber: **Siemens Aktiengesellschaft Berlin und München, Wittelsbacherplatz 2, D-8000 München 2 (DE)**

(72) Erfinder: **Herbst, Heiner, Dr., Anechostrasse 29a, D-8000 München 82 (DE)**
Erfinder: **Pfleiderer, Hans-Jörg, Dr., Franz-Krinninger-Weg 23, D-8011 Zorneding (DE)**
Erfinder: **Grassl, Hans-Peter, Dipl.-Phys., Regina-Ullmann-Strasse 34, D-8000 München 81 (DE)**

# Beschreibung

Die Erfindung bezieht sich auf eine mit einem Belichtungsmessteil versehene Schaltung zur sensorgesteuerten Entfernungsmessung nach dem Oberbegriff des Patentanspruchs 1.

Eine Schaltung dieser Art ist in der DE-A-2 800 448, vgl. insbesondere Fig. 12, beschrieben. Wird dabei einer der linearen Bildsensoren durch einen projizierten Zeilenausschnitt belichtet, der eine grosse Helligkeit aufweist, so treten Schwierigkeiten auf, die darauf beruhen, dass ein Teil der optisch erzeugten Ladung aus den stark belichteten Sensorelementen in die Nachbarelemente überläuft, bevor die Integrationszeit (Zeitspanne, in der eine optische Ladungserzeugung in den belichteten Sensorelementen erfolgt) beendet ist. Das führt jedoch zu Signalverfälschungen in den Sensorelementen, die eine exakte Entfernungsmessung behindern. Zur Abhilfe werden bei dieser Schaltung die ausgelesenen Bildsensorsignale in einem Komparator mit einer einstellbaren Referenzspannung verglichen. Überschreitet die Amplitude der Bildsensorsignale die Referenzspannung, so wird die Frequenz der die Bildsensoren beaufschlagenden Taktimpulsspannung über eine Regelschaltung erhöht, was zu einer Verringerung der Integrationszeit führt. Der schaltungstechnische Aufwand ist dabei jedoch relativ gross.

Aus der DE-A-2 810 501 ist eine optoelektronische Fühleinrichtung mit Fotosensoren und Bezugssensoren bekannt, in der elektrische Differenzsignale erzeugt werden, deren minimaler Wert durch die Fühleinrichtung ermittelt wird. Diese Fühleinrichtung dient insbesondere dazu, eine Kamera automatisch auf einen zu fotografierenden Gegenstand scharf einzustellen. Eine Belichtungsmessung zum Zwecke der Einstellung der Integrationszeit ist dabei nicht vorgesehen.

Der Erfindung liegt die Aufgabe zugrunde, bei einer Schaltung der eingangs genannten Art auch bei einer stark ungleichmässigen Belichtung des oder der linearen Bildsensoren eine einwandfreie Bestimmung der Integrationszeit zu ermöglichen. Diese Aufgabe wird durch die im Patentanspruch 1 angegebenen Merkmale gelöst.

Der mit der Erfindung erzielbare Vorteil liegt insbesondere darin, dass eine stark ungleichmässige Belichtung des oder der linearen Bildsensoren durch die Anordnung mehrerer Vergleichs-Sensorelemente, von denen jedes für sich die Dauer der Integrationszeit beeinflusst, weitgehend ausgeglichen wird.

Die Unteransprüche sind auf vorteilhafte Ausgestaltungen und Weiterbildungen der Erfindung gerichtet.

Die Erfindung wird nachfolgend anhand der in der Zeichnung dargestellten, bevorzugten Ausführungsbeispiele näher erläutert. Dabei zeigt:

Fig. 1 ein erstes Ausführungsbeispiel,

Fig. 2 eine Teilschaltung von Fig. 1,

Fig. 3 Spannungs-Zeit-Diagramme zur Erläuterung der Figuren 1 und 2,

Fig. 4 eine erste Ausgestaltung der Bildsensoren nach Fig. 1,

Fig. 5 eine schaltungstechnische Alternative zu Fig. 4,

Fig 6 eine zweite schaltungstechnische Alternative zu Fig. 4,

Fig. 7 ein zweites Ausführungsbeispiel und

Fig. 8 ein drittes Ausführungsbeispiel der Erfindung.

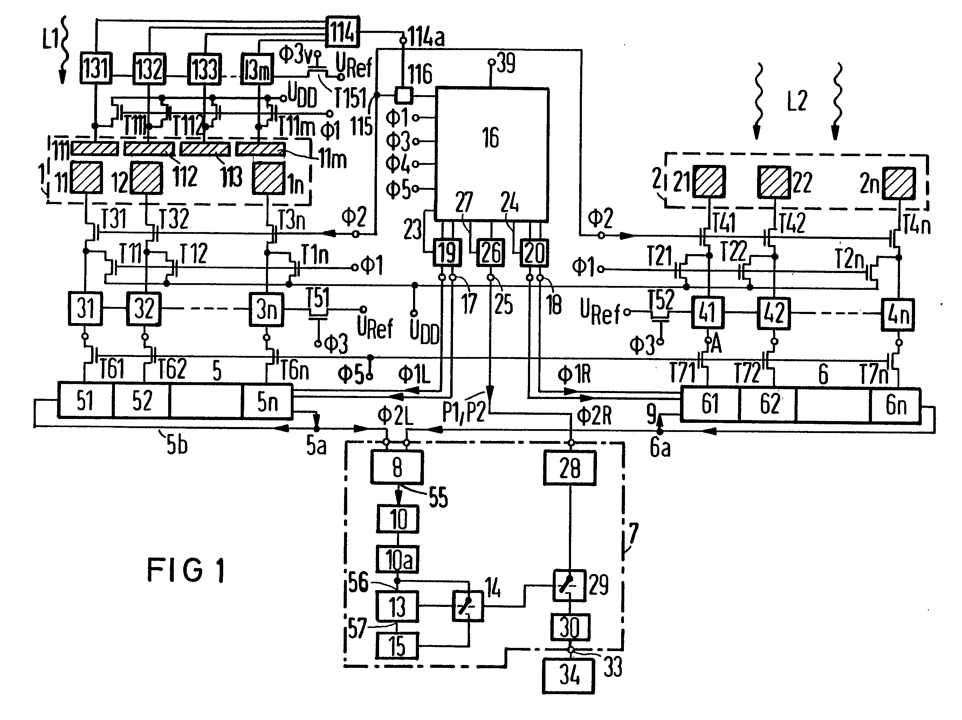

Die in Fig. 1 dargestellte Schaltung enthält zwei lineare Bildsensoren 1 und 2, die mit Sensorelementen 11, 12... 1n und 21, 22... 2n bestückt sind. Die Bildsensoren 1, 2 sind auf einem dotierten Halbleiterkörper eines ersten Leitfähigkeitstyps integriert. Werden die Sensorelemente als Fotodioden realisiert, so stellen die schraffierten Rechtecke an einer Grenzfläche des Halbleiterkörpers angeordnete Bereiche eines zu dem ersten entgegengesetzten, zweiten Leitfähigkeitstyps dar. Die Sensorelemente 11... 1n und 21... 2n sind über in Serie geschaltete individuell zugeordnete Schalttransistoren T11... T1n und T31... T3n bzw. T21...T2n und T41... T4n mit Anschlüssen verbunden, die mit einer Versorgungsspannung $U_{DD}$ beschaltet sind. Die Gateelektroden der Schalttransistoren T11... T1n und T21... T2n sind jeweils an einen gemeinsamen Anschluss geführt, dem eine Taktimpulsspannung $\Phi1$ zugeführt wird. Die Sensorelemente 11... 1n und 21... 2n sind andererseits über die Schalttransistoren T31... T3n und T41... T4n, deren Gateelektroden mit einer gemeinsamen Taktimpulsspannung $\Phi2$ beschaltet sind, mit den Eingängen von Bewertern 31... 3n und 41... 4n verbunden.

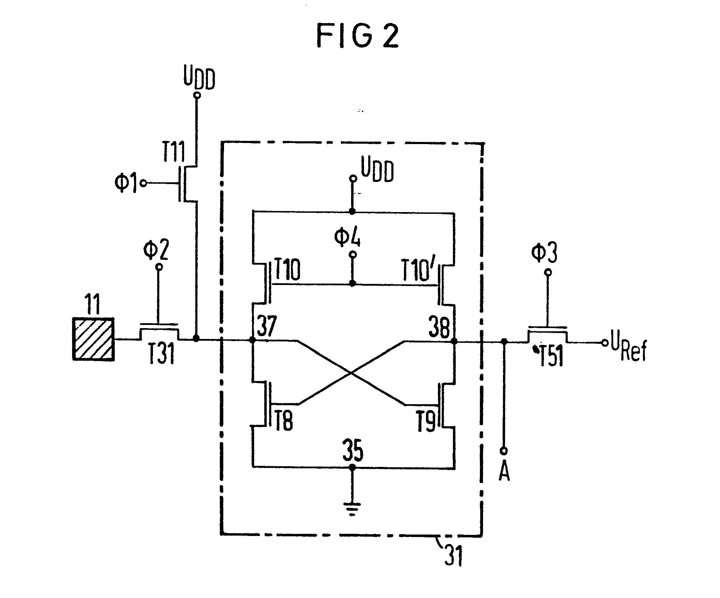

Eine zweckmässige schaltungstechnische Durchbildung der Bewerter 31... 3n und 41... 4n soll anhand der Fig. 2 noch näher beschrieben werden. Weitere Eingänge dieser Bewerter sind über gemeinsame Schalttransistoren T51 und T52, deren Gateelektroden mit einer Taktimpulsspannung $\Phi3$ beschaltet sind, an Anschlüsse geführt, die an einer Referenzspannung $U_{Ref}$ liegen. Die Bewerter 31... 3n und 41... 4n können in Abhängigkeit von den Spannungen, die ihnen über die Schalttransistoren T31... T3n und T41... T4n zugeführt werden, einen von zwei möglichen Schaltzuständen einnehmen. Ihre Ausgangssignale S11... S1n und S21... S2n, die je nach dem eingenommenen Schaltzustand dem logischen Spannungspegel «1» oder «0» entsprechen, werden über Transfertransistoren T61... T6n und T71... T7n, deren Gateelektroden mit einer gemeinsamen Taktimpulsspannung $\Phi5$ beaufschlagt sind, den Eingängen der einzelnen Stufen 51, 52... 5n und 61, 62... 6n zweier den Bildsensoren individuell zugeordneter Schieberegister 5 und 6 zugeführt, die vorzugsweise als zweiphasige, dynamische Schieberegister ausgebildet sind. Das Schieberegister 5 weist zwei Eingänge auf, die mit Taktimpulsspannungen $\Phi1L$ und $\Phi2L$ beschaltet sind, während das Schieberegister 6 zwei Eingänge besitzt, denen die Taktimpulsspannungen $\Phi1R$ und $\Phi2R$ zugeführt werden. Der Ausgang 5 der Stufe 5n ist einerseits über eine Leitung 5b mit dem Eingang der Stufe 51 verbunden und andererseits an einen ersten Eingang einer in einem Auswerteteil 7 angeordneten logischen Schaltung 8 zugeführt. Der Ausgang 6a der Stufe 6n ist in entsprechender Weise über eine Leitung 9 an den Eingang der Stufe 61 geführt und andererseits mit einem zweiten Eingang von 8 verbunden.

Der logischen Schaltung 8 ist ein Zähler 10 nachgeschaltet, dessen Ausgang über einen Speicher 10a mit dem ersten Eingang eines digitalen Komparators 13 und über einen elektronischen Schalter 14 mit einem Speicher 15 verbunden ist. Der Ausgang des Speichers 15 ist an einen zweiten Eingang des digitalen Komparators 13 geführt.

Der Taktimpulsgeber 16 ist mit Ausgängen für die Taktimpulsspannungen $\Phi1$, $\Phi3$ und $\Phi5$ versehen. Über weitere Ausgänge 17 und 18 werden die Taktimpulsspannungen $\Phi1L$ und $\Phi2L$ sowie $\Phi1R$ und $\Phi2R$ abgegeben, wobei in Serie zu den Ausgängen 17 eine Torschaltung 19 und in Serie zu den Ausgängen 18 eine Torschaltung 20 angeordnet sind. Die Steuereingänge von 19 und 20 werden über Leitungen 23 und 24 mit noch näher zu beschreibenden Steuersignalen beaufschlagt. Der Taktimpulsgeber weist einen weiteren Ausgang 25 auf, zu dem eine weitere Torschaltung 26 in Serie angeordnet ist. Diese wird über eine Leitung 27 mit einem weiteren Steuersignal belegt. Der Ausgang 25 ist mit dem Eingang eines Zählers 28 verbunden, dessen Ausgang über einen elektronischen Schalter 29 mit einem Speicher 30 in Verbindung steht. Der Ausgang 33 des Speichers 30 ist mit einer weiter unten beschriebenen Vorrichtung 34 beschaltet.

Neben den Sensorelementen 11... 1n sind mehrere streifenförmig ausgebildete Vergleichs-Sensorelemente 111, 112... 11m angeordnet, deren Längsachsen nach einer parallel zum Bildsensor 1 verlaufenden Linie ausgerichtet sind. Die in Längsrichtung des Bildsensors 1 gemessene Länge jedes der Vergleichs-Sensorelemente 111... 11m ist dabei wesentlich kleiner als die in gleicher Richtung gemessene Länge des Bildsensors 1. Geht man davon aus, dass der Bildsensor z.B. 84 in einer Linie angeordnete Sensorelemente enthält, so können beispielsweise 7 Vergleichs-Sensorelemente vorgesehen sein, die in einer Linie hintereinander angeordnet sind. Dabei entspricht dann die Länge eines einzelnen Vergleichs-Sensorelements etwa der Länge von 12 Sensorelementen. Allgemein ist jedes Vergleichs-Sensorelement so langgestreckt ausgebildet, dass seine Fläche jeweils der Summe der Flächen einer Mehrzahl von Sensorelementen 11... 1n entspricht.

Die Vergleichs-Sensorelemente 111... 11m sind über Schalttransistoren T111... T11m mit einem gemeinsamen Anschluss verbunden, der mit der Versorgungsspannung $U_{DD}$ beschaltet ist. Dabei werden die Gateelektroden der Transistoren T111... T11m mit der Taktimpulsspannung $\Phi1$ beaufschlagt. Andererseits sind die Vergleichs-Sensorelemente 111... 11m mit den Eingängen von Bewertern 131, 132... 13m verbunden, die den Bewertern 31... 3n und 41... 4n im Aufbau etwa entsprechen. Die Ausgänge der Bewerter 131...

13m sind an die Eingänge einer Gatterschaltung 114 geführt, deren Ausgang an den Steuereingang einer Torschaltung 116 geschaltet ist. Die Torschaltung 116 ist in Serie zu einem Ausgang 115 des Taktimpulsgebers 16 angeordnet, an dem die Taktimpulsspannung $\Phi2$ abgreifbar ist. Die Schaltungsteile 111..., T111..., 131..., 114, 116 und T151 stellen den Belichtungsmessteil der Schaltung dar.

Fig. 2 zeigt eine zweckmässige Ausgestaltung der Bewerter 31... 3n, 41... 4n und 131, 132... 13m anhand des Bewerters 31. Er besteht aus einer Flip-Flop-Schaltung mit den Schalttransistoren T8 und T9 und den als schaltbare Lastelemente betriebenen Transistoren T10 und T10'. Die Source-Anschlüsse von T8 und T9 sind über einen gemeinsamen Anschluss 35 an das Bezugspotential der Schaltung angeschlossen, die Drainanschlüsse von T10 und T10' über einen gemeinsamen Anschluss an die Versorgungsspannung $U_{DD}$. Der Eingangsknoten des Bewerters 31 ist mit 37 bezeichnet, der mit dem Ausgang A verbundene Ausgangsknoten mit 38. Zwischen den Gateelektroden von T8 und T9 und den Knoten 37 und 38 besteht eine Kreuzkopplung. Die Gateelektroden von T10 und T10' der Bewerter 31... 3n und 41... 4n sind über einen gemeinsamen Anschluss mit einer Taktimpulsspannung $\Phi4$ beschaltet. Die an die Knoten 37 und 38 angeschlossenen Schaltungsteile T11, 11 und T31 sowie T51 wurden bereits anhand der Fig. 1 beschrieben.

Das bei der Erfindung verwendete Prinzip der Entfernungsmessung eines Gegenstandes geht davon aus, dass von diesem über zwei optische Einrichtungen zwei getrennte Abbildungen gewonnen werden, deren entfernungsabhängige Relativpositionen ausgewertet werden. Die Lichtstrahlen L1 in Fig. 1 gehen dabei von dem in seiner Entfernung zu bestimmenden Gegenstand aus. Sie projizieren über eine erste optische Einrichtung eine Abbildung desselben in der Weise auf die Ebene des Bildsensors 1, dass dieser auf einen Zeilenausschnitt der Abbildung ausgerichtet ist. In analoger Weise projizieren die Lichtstrahlen L2, die über eine zweite optische Einrichtung von dem Gegenstand gewonnen werden, eine zweite Abbildung desselben auf die Ebene des Bildsensors 2, und zwar derart, dass dieser auf den gleichen Zeilenausschnitt gerichtet ist, wenn sich der Gegenstand in einem vorgegebenen Abstand, z.B. im Abstand «unendlich» befindet. Verändert sich der Abstand des Gegenstandes gegenüber dem vorgegebenen Wert, so verschieben sich die auf die Bildsensoren 1 und 2 projizierten Zeilenausschnitte dementsprechend in Längsrichtung der Bildsensoren. Die Grösse der gegenseitigen Verschiebung stellt dabei ein Mass für die tatsächliche Entfernung des Gegenstandes dar. Eine ähnliche Methode der Entfernungsmessung, bei der die vorstehend beschriebenen relativen Verschiebungen zweier Abbildungen des Gegenstandes ausgenutzt werden, aber anstelle von linearen Bildsensoren flächenhafte Anordnungen von Fotodioden vorgesehen sind, ist beispielsweise aus der Zeitschrift «Electronics» vom 10.11.1977, Seiten 40 bis 44, bekannt.

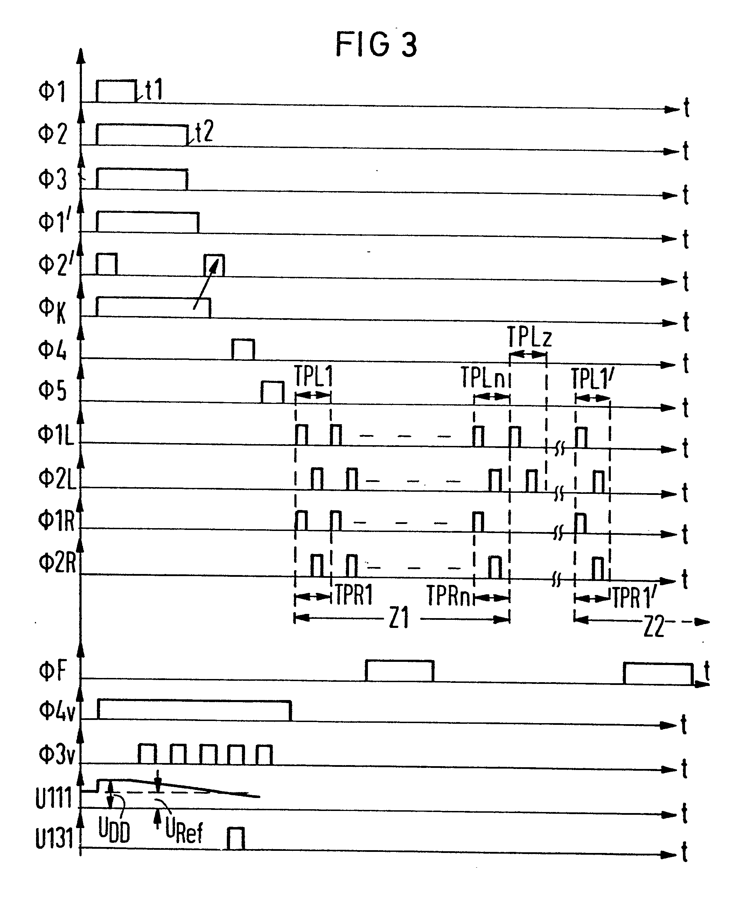

Die Wirkungsweise der Schaltung nach den Figuren 1 und 2 ergibt sich in Verbindung mit den Impuls-Zeit-Diagrammen nach Fig. 3. Wird einem Eingang 39 des Taktimpulsgebers 16 ein Triggerimpuls zugeführt, so gibt dieser zunächst Taktimpulse $\Phi 1$ und $\Phi 2$ ab. Damit werden die Sensorelemente, z.B. 11 und die Eingangsknoten, z.B. 37, der Bewerter 31... 3n und 41... 4n über die leitenden Transistoren, z.B. T11 und T31, auf die Versorgungsspannung $U_{DD}$ rückgesetzt. Ein gleichzeitig beginnender Taktimpuls $\Phi 3$ schaltet T51 in den leitenden Zustand, so dass der Ausgangsknoten 38 auf die Referenzspannung $U_{Ref}$ gelegt wird. Beim Abschalten des Taktimpulses $\Phi 1$ beginnen sich in den Sensorelementen z.B. 11, durch die einfallenden Lichtstrahlen L1 bzw. L2 erzeugte Ladungsträger anzusammeln, wobei in den Sensorelementen ein Spannungsabfall entsteht. Je grösser die in den Sensorelementen 11... 1n und 21... 2n jeweils angesammelten, optisch erzeugten Ladungen sind, desto stärker verringert sich das Potential an den zugeordneten Eingangsknoten, z.B. 37, der Bewerter. Die Zeitspanne zwischen dem Ende des Taktimpulses $\Phi 1$ zum Zeitpunkt t1 und dem Ende des Taktimpulses $\Phi 2$ zum Zeitpunkt t2 wird als Integrationszeit bezeichnet. Nur innerhalb dieser Zeitspanne sammeln sich optisch erzeugte Ladungen in den Sensorelementen an. Nach Beendigung des Taktimpulses $\Phi 2$ und nach Beendigung des Taktimpulses $\Phi 3$ wird ein Taktimpuls $\Phi 4$, der an einem weiteren Ausgang des Taktimpulsgebers abgreifbar ist, an die Gateelektroden von T10 und T10' gelegt, so dass die Flip-Flop-Schaltungen der Bewerter 31... 3n und 41... 4n aktiviert werden. Am Ausgangsknoten, z.B. 38, stellt sich für den Fall, dass am Knoten 37 ein solcher Spannungsabfall aufgetreten war, dass die Referenzspannung $U_{Ref}$ unterschritten wurde, eine Spannung ein, die etwa der Versorgungsspannung $U_{DD}$ entspricht (logische «1»). Wird dagegen $U_{Ref}$ durch die Spannung am Knoten 37 nicht unterschritten, so gelangt der Knoten 38 auf ein Potential, das etwa dem Bezugspotential am Anschluss 35 entspricht (logische «0»). Damit gibt jeder Bewerter ein digitalisiertes Sensorsignal, z.B. S11, ab, dessen Wert abhängig ist vom Erreichen oder Nichterreichen einer Bezugsladung in den einzelnen Sensorelementen, die gerade dann vorliegt, wenn das Potential am Knoten 37 zum Zeitpunkt t2 dem Potential des auf die Spannung $U_{Ref}$ rückgesetzten Knotens 38 gleichkommt.

Die Bestimmung der optimalen Integrationszeit geht in folgender Weise vor sich: In jedem einzelnen Vergleichs-Sensorelement, z.B. 111, sammelt sich nach dem Zeitpunkt t1 eine optisch erzeugte Ladungsmenge an, die flächenspezifisch, d.h. auf die belichtete Fläche bezogen, jeweils dem Mittelwert aller jener Ladungen entspricht, die sich im gleichen Zeitraum in den neben dem Vergleichs-Sensorelement angeordneten Sensorelementen des Bildsensors 1 angesammelt haben. Berücksichtigt man, dass jedes Vergleichs-Sensorelement neben einer bestimmten Zahl von Sensorelementen 11... 1n angeordnet ist, die klein ist gegenüber der gesamten Anzahl der Sensorelemente des Bildsensors 1, so erkennt man, dass der in dem Vergleichs-Sensorelement gebildete flächenspezifische Ladungsmittelwert bei einer ungleichmässigen Belichtung des Bildsensors 1 bei weitem nicht so stark von den lokalen, optisch erzeugten flächenspezifischen Ladungsmengen in den einzelnen, ihm zugeordneten Sensorelementen 11... 1n abweicht, als das bei einem einzigen Vergleichs-Sensorelement der Fall wäre, das sich über die ganze Länge des Bildsensors 1 erstreckt und damit einen Ladungsmittelwert über die gesamte Länge der Sensorelementenzeile 11 bis 1n bildet.

Jeder in den Vergleichs-Sensorelementen 111... 11m gebildete Ladungsmittelwert bewirkt in der bereits beschriebenen Weise einen Spannungsabfall am Eingang eines Bewerters 131... 13m. Jeder derselben ist vorzugsweise so aufgebaut wie in Fig. 2 dargestellt, wobei die Taktimpulsspannungen $\Phi 3$ und $\Phi 4$ durch die Spannungen $\Phi 3v$ und $\Phi 4v$ ersetzt sind. Zum Zeitpunkt t1 beginnt die Spannung U111 an 37 von dem Rücksetzwert $U_{DD}$ ausgehend allmählich abzusinken, wie in Fig. 3 dargestellt ist. Durch $\Phi 4v$ ist die Flip-Flop-Schaltung aktiviert. Solange U111 am Knoten 37 grösser ist als die Spannung $U_{Ref}$, die beim Auftreten jedes Taktimpulses $\Phi 3v$ an den Knoten 38 gelegt wird, gibt der Bewerter 131 am Ausgang A eine logische «0» ab. Unterschreitet U111 die Spannung $U_{Ref}$, so wird dieser Bewerter in einen Schaltzustand versetzt, in dem er ein dem logischen Pegel «1» entsprechendes Ausgangssignal $U_{131}$ abgibt. Dieses wird über die mit A verbundene, als Oder-Gatter ausgebildete Gatterschaltung 114 dem Steuereingang der Torschaltung 116 als ein Steuersignal zugeführt, welches den Taktimpuls $\Phi 2$ unterbricht. Damit ist die Integrationszeit für alle Sensorelemente 11... 1n und 21... 2n beendet. Wesentlich ist, dass jeweils der erste auf den logischen Ausgangspegel «1» umgeschaltete Bewerter der Bewertergruppe 131... 13m bereits die Abschaltung von $\Phi 2$ bewirkt. Hieraus ergibt sich, dass die Integrationszeit nur nach dem jeweils am meisten belichteten, einer Vergleichs-Sensorlänge entsprechenden Teilstück der Sensorelementenzeile 11... 1n bemessen wird Bei einem einzigen, über die ganze Länge der Sensorelementenzeile 11... 1n reichenden Vergleichs-Sensorelement würde demgegenüber der Mittelwert der Belichtung der ganzen Zeile zur Integrationszeitbemessung herangezogen, was bei einer stark ungleichmässigen Belichtung zu einer wesentlich grösseren Integrationszeit führen würde als bei der gezeigten Anordnung mehrerer Vergleichs-Sensorelemente 111... 11m.

Beim Auftreten eines Taktimpulses $\Phi 5$ werden dann die von den Bewertern 31... 3n und 41... 4n abgegebenen digitalisierten Sensorsignale, z.B. S11, den Eingängen der zugeordneten Stufen, z.B. 51, der Schieberegister 5 und 6 zugeführt und in diesen gespeichert.

Der Taktimpulsgeber 16 liefert anschliessend Taktimpulsfolgen $\Phi 1L$, $\Phi 2L$, $\Phi 1R$ und $\Phi 2R$, die die in den Stufen der Schieberegister 5 und 6 enthaltenen Informationen jeweils um eine Stufe verschieben. Vor dem Auftreten der Taktimpulse 43 und 44, die zu einer Taktperiode TPL1 gehören, erscheint das Sensorsignal S1n am Ausgang 5a. Die Taktimpulse 43 und 44 verschieben die Information S1n in die Stufe 51 und die Information S1(n-1) an den Ausgang 5a, und so weiter. Durch die Taktimpulse 45 und 46 der Taktperiode TPLn gelangt schliesslich nach einem vollen Informationsumlauf wieder das Sensorsignal S1n an den Ausgang 5a. Es folgt eine Taktperiode TPLz mit den Taktimpulsen 47 und 48, durch die das Sensorsignal S1(n-1) am Ausgang 5a erscheint. Nach einer sich anschliessenden, mit 49 bezeichneten Austastlücke schieben die Taktimpulse 53 und 54 der Taktperiode TPL1' die Sensorsignale wieder um eine Stufe weiter, so dass S1(n-1) in die Stufe 51 gelangt und S1(n-2) an den Ausgang 5a durchgeschaltet wird.

In einem ersten Auslesezyklus 21, der die Taktperioden mit TPL1 bis TPLn umfasst, werden also die Sensorsignale S1n bis S1 und wieder S1n am Ausgang 5a seriell ausgegeben. In einem zweiten Auslesezyklus Z2, der die Taktperiode TPL1' und n-1 weitere Taktperioden umfasst, erfolgt eine zweite serielle Ausgabe aller Sensorsignale des Bildsensors 1, wobei die Signale S1(n-1) bis S1 und wieder S1n und S1(n-1) an 5a auftreten. Innerhalb des ersten Auslesezyklus Z1 wird das Schieberegister 6 ebenfalls mit n Taktperioden TPR1 bis TPRn beaufschlagt, während den Taktimpulsen 47 und 48 entsprechende Impulse fehlen. Das hat zur Folge, dass zu Beginn von Z2 das Sensorsignal S2n am Ausgang 6a und das Signal S1(n-1) am Ausgang 5a anliegen.

Somit werden im ersten Auslesezyklus Z1 die Signalpaare S1n und S2n, S1(n-1) und S2(n-1) usw. an 5a und 6a seriell ausgelesen, im zweiten Auslesezyklus dagegen die Signalpaare S1(n-1) und S2n, S1(n-2) und S2(n-1) usw. Die seriell ausgelesenen Informationen der Schieberegister 5 und 6 sind also in zwei aufeinanderfolgenden Auslesezyklen um jeweils eine Signalbreite gegeneinander verschoben. Nach n Auslesezyklen haben sie dann wieder dieselbe zeitliche Zuordnung wie im Zyklus Z1. In Fig. 1 kann diese Verschiebung dadurch erreicht werden, dass die Torschaltung 20 über die Leitung 24 während des Auftretens der Taktimpulse 47 und 48, d.h. zwischen den Taktperioden TPRn und TPR1', gesperrt wird. In diesem Zeitraum kann die Torschaltung 26 über die Steuerleitung 27 geöffnet werden, so dass einer der Impulse 47 oder 48 oder ein von diesen abgeleiteter Impuls am Ausgang 25 als Verschiebeimpuls P1 erscheint. Dieser Verschiebeimpuls P1 kennzeichnet dabei den Beginn eines neuen Auslesezyklus und eine gegenseitige Verschiebung der an den Ausgängen 5a und 6a seriell ausgelesenen Sensorsignale um jeweils eine Signalbreite.

Die innerhalb eines Auslesezyklus, z.B. Z1, ausgelesenen Sensorsignalpaare werden in der logischen Schaltung 8 nach der Exklusiv-Oder-Funktion bewertet. Dabei tritt am Ausgang 55 von 8 immer dann ein Ausgangsimpuls auf, wenn die eingangsseitig über 5a und 6a zugeführten digitalen Signale übereinstimmen. Stimmen sie nicht überein, so wird von 8 kein Ausgangsimpuls abgegeben. Die Teilschaltung 8 kann aber auch so ausgebildet sein, dass sie nur die Übereinstimmung zweier «1»-Signale oder zweier «0»-Signale an ihren Eingängen durch einen Ausgangsimpuls angibt. Der Zähler 10, der vor Beginn jedes Auslesezyklus, also in den Austastlücken 49, auf Null rückgesetzt wird, zählt dann die Anzahl der Übereinstimmungen innerhalb eines solchen Zyklus.

Hierbei wird der Zähler 10 allerdings nur während eines Teils jedes Auslesezyklus wirksam geschaltet, der durch einen von 16 abgegebenen Impuls $\Phi F$ bestimmt wird. Nimmt man an, dass der Zähler 10 im Auslesezyklus Z1 die Übereinstimmungen innerhalb der Taktperioden $TPR_i$ bis $TPR_k$ zählt, wobei die Differenz k-i etwa n/2 oder 3n/4 beträgt, so zählt er im Auslesezyklus Z2 die Übereinstimmungen innerhalb der Taktperioden $TPR'_{i+1}$ bis $TPR'_{k+1}$. Betrachtet man die Impulse $\Phi F1$ und $\Phi F2$ jeweils als «Auslesefenster», so haben sich die Sensorsignale des Schieberegisters 6 im Fenster $\Phi F2$ gegenüber dem Fenster $\Phi F1$ um eine Signalbreite nach links (Fig. 3) verschoben. Im nächsten Auslesezyklus Z3, in dem der entsprechende Impuls $\Phi F3$ dieselben Taktimpulsperioden umfasst wie in Z2, haben sich dann die Signale von 5 im «Fenster» $\Phi F3$ um eine Signalbreite nach rechts verschoben. Wird das «Fenster» generell im ersten Auslesezyklus Z1 und in den weiteren Auslesezyklen Z3, Z5, Z7 usw. um eine Taktperiodenlänge jeweils nach rechts verschoben, so entspricht das einer abwechselnden Verschiebung der an 6a bzw. 5a abgegriffenen Sensorsignalfolgen in dem jeweiligen Fenster $\Phi F$ um eine Signalbreite nach links bzw. rechts. Diejenigen Impulse $\Phi F$, die die vom Zeilenanfang und vom Zeilenende einer der Sensorelementenzeilen abgeleiteten Bewertersignale gleichzeitig umschliessen würden, werden vom Taktimpulsgeber 16 unterdrückt. Hierdurch wird erreicht, dass die «Fenster» $\Phi F$ die Auswertung von denjenigen Sensorsignalen ausschalten, die von den in vertauschter Zuordnung nebeneinanderstehenden Anfangs- und Endabschnitten der projizierten Zeilenausschnitte abgeleitet worden sind, so dass sie keine Aussage über den tatsächlichen Helligkeitsverlauf längs des Zeilenausschnitts vermitteln.

Ist das Zählerergebnis, das dem Eingang 56 des digitalen Komparators 13 zugeführt wird, grösser als das an seinem Eingang 57 liegende digitale Signal, so werden die Steuereingänge der Schalter 14 und 29 mit einem Komparatorsignal beaufschlagt, so dass beide Schalter in solche Schaltzustände bringt, in denen sie die an ihre Eingänge gelegten Signale an die jeweiligen Ausgänge übertragen werden. Nachdem das Zählerergebnis der Übereinstimmungen des ersten Informationszyklus Z1 als erstes digitales Signal dem Speicher 15 und über diesen dem Eingang 57 des Komparators zugeführt wird, wird danach nur noch ein solches Zählergebnis eines weiteren Informa-

tionszyklus $Z_i$ in den Speicher 15 übernommen, das grösser ist als das grösste jeweils zuvor gespeicherte. Die am Ende der Informationszyklen Z1, Z2 und so weiter auftretenden Verschiebeimpulse P1, P2 usw. werden im Zähler 28 gezählt. Da der Schalter 29 synchron mit dem Schalter 14 betätigt wird, überträgt er immer beim Auftreten eines grösseren Zählergebnisses im Zähler 10 den jeweils neuen Zählerstand von 28 auf den Speicher 30. Damit ist im Speicher 30 nach n Informationszyklen die Anzahl der Verschiebeimpulse $P_i$ gespeichert, die eine solche Informationsverschiebung zwischen den Sensorsignalen der Schieberegister 5 und 6 kennzeichnet, bei der die grösste Anzahl von Übereinstimmungen auftritt. Mit anderen Worten: die Anzahl der im Speicher 30 gespeicherten Schiebeimpulse P1, P2 usw. gibt diejenige relative Verschiebung der in den Schieberegistern 5 und 6 umlaufenden Sensorsignale ab, bei der eine maximale Korrelation der miteinander verglichenen Sensorsignale besteht.

Die in Fig. 3 angedeuteten Austastlücken 49, die z.B. zum jeweiligen Rücksetzen des Zählers 10 auf Null erforderlich sind, werden durch eine entsprechende Sperrung der Torschaltungen 19 und 20 über ihre Steuerleitungen 23 und 24 erzeugt.

Das am Ausgang 33 des Speichers 30 auftretende digitale Signal wird einer Vorrichtung 34 zugeführt, die als eine Anzeigevorrichtung aufgefasst werden kann, die nach einer entsprechenden Codierung des digitalen Signals eine digitale oder analoge Anzeige der Entfernung des Gegenstandes liefert. Andererseits kann die Vorrichtung 34 auch aus einer an sich bekannten Einstellvorrichtung einer fotografischen oder elektronischen Kamera bestehen, die den Abstand eines gegenüber einer Bildebene bewegbaren Objektivs so einstellt, dass der Gegenstand auf diese Bildebene scharf abgebildet wird. Eine Vorrichtung dieser Art ist beispielsweise in der Zeitschrift «Electronics» vom 10. Nov. 1977 auf den Seiten 40 bis 44 beschrieben.

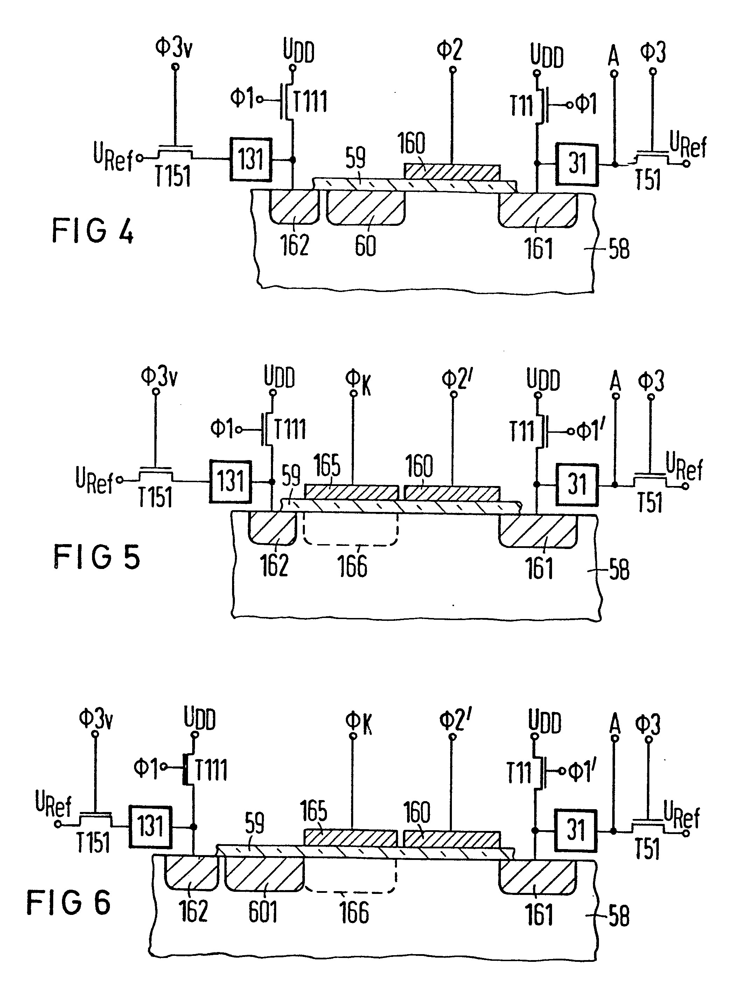

Fig. 4 zeigt eine schaltungstechnische Ausbildung der Sensorelemente 11... 1n und 21... 2n sowie der angrenzenden Schaltungsteile anhand des Sensorelementes 11. Auf einem dotierten Halbleiterkörper 58, z.B. aus p-dotiertem Silizium, ist eine dünne, elektrisch isolierende Schicht 59, z.B. aus $SiO_2$, vorgesehen. Der Bildsensor 11 ist hierbei als eine Fotodiode ausgebildet, die aus dem n-dotierten Halbleitergebiet 60 besteht. Dieses Gebiet bildet gleichzeitig auch das Sourcegebiet des Transistors T31 (Fig. 1). Das Gate von T31 ist auf der isolierenden Schicht 59 angeordnet und mit 160 bezeichnet. Das Draingebiet von T31 trägt das Bezugszeichen 161. Das Gebiet 161 ist einerseits über den Transistor T11 mit einem Anschluss verbunden, der mit der Versorgungsspannung $U_{DD}$ beschaltet ist, und bildet andererseits den Eingang des Bewerters 31 bzw. das Draingebiet des in diesem vorgesehenen Transistors T8 (Fig. 2) und das Sourcegebiet des Transistors T10. Der zweite Eingang von 31 ist entsprechend Fig. 2 über den mit $\Phi 3$ beaufschlagten Transistor T51 mit einem Anschluss verbunden, der an der Referenzspannung $U_{Ref}$ liegt. Das Vergleichs-Sensorelement 111 ist als eine aus dem n-dotierten Gebiet 162 bestehende Fotodiode ausgebildet. Das Gebiet 162 ist einerseits über den mit $\Phi 1$ beaufschlagten Transistor T111 mit einem Anschluss verbunden, der mit $U_{DD}$ beschaltet ist, und andererseits an den ersten Eingang des Bewerters 131 geführt, dessen zweiter Eingang über einen mit $\Phi 3v$ beaufschlagten Transistor T151 an der Referenzspannung $U_{Ref}$ liegt.

Eine alternative Schaltung zu Fig. 4 zeigt Fig. 5. Danach besteht das Sensorelement 11 aus einem MIS-Kondensator (Metall-Isolierschicht-Halbleiter-Kondensator), der ein Gate 165 besitzt, das auf der Isolierschicht 59 angeordnet ist. Das Gate 165 ist z.B. aus hochdotiertem polykristallinem Silizium gefertigt und liegt an einer Taktimpulsspannung $\Phi_K$, unter deren Einfluss sich eine Raumladungszone 166 im Halbleiterkörper 58 ausbildet. Die weiteren Schaltungsteile von Fig. 5 entsprechen den mit gleichen Bezugszeichen versehenen Schaltungsteilen von Fig. 4, wobei darauf hingewiesen sei, dass der Transistor T11 mit einer Taktimpulsspannung $\Phi 1'$ und der Transistor T31 mit einer Taktimpulsspannung $\Phi 2'$ belegt ist. Die gleichzeitig beginnenden Taktimpulse $\Phi 1'$, $\Phi 2$ und $\Phi_K$ bewirken bis zum Zeitpunkt t1 ein Rücksetzen des MIS-Kondensators im Bereich der Grenzfläche 58a des Halbleiterkörpers 58 etwa auf den Wert der Versorgungsspannung $U_{DD}$. Zum Zeitpunkt t1 beginnt in dem weiterhin mit $\Phi_K$ beaufschlagten MIS-Kondensator die Integrationszeit, in der optisch erzeugte Ladungsträger gesammelt werden. Mit dem Ende von $\Phi_K$ zum Zeitpunkt t2' ist auch das Ende der Integrationszeit erreicht. Kurz vor dem Zeitpunkt t2' wird ein neuer Taktimpuls $\Phi 2'$ angelegt, so dass eine durch den Pfeil 504 (Fig. 3) angedeutete Ladungsübernahme von 166 nach 161 stattfinden kann, die am Eingang des Bewerters 31 eine entsprechende Potentialänderung hervorruft. Der Taktimpuls $\Phi 1'$ muss, wie in Fig. 3 angedeutet ist, vor dieser Ladungsübernahme abgeschaltet werden.

Fig. 6 unterscheidet sich von Fig. 5 lediglich dadurch, dass eine Fotodiode 601 neben dem MIS-Kondensator 165, 166 angeordnet ist, und zwar auf der von T31 abgewandten Seite desselben. Die Gateelektrode von T31 ist mit der Impulsspannung $\Phi 2'$ beschaltet, während der Gateelektrode von T11 die Taktimpulsspannung $\Phi 1'$ zugeführt wird. Die Kapazität des Sensorelements 11 nach Fig. 5 ist grösser als die Kapazität des Sensorelements nach Fig. 4, während die Kapazität des Sensorelements 11 nach Fig. 6 grösser ist als die des Sensorelementes nach Fig. 5.

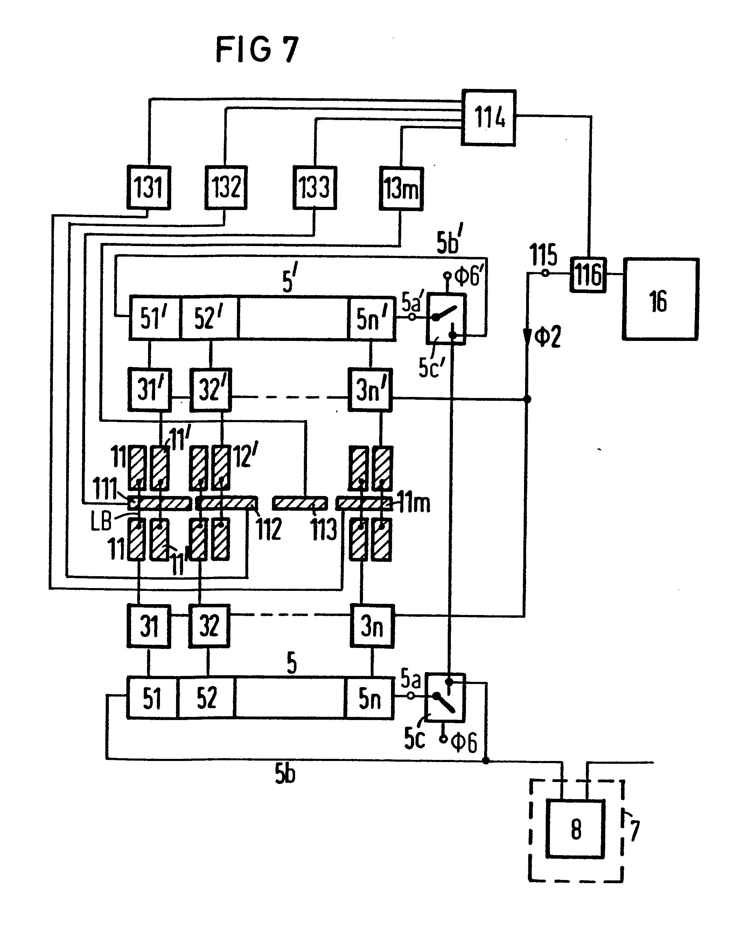

In Fig. 7 ist ein zweites Ausführungsbeispiel der Erfindung dargestellt, bei dem zwei Schaltungen nach Fig. 1 mit einem gemeinsamen Auswerteteil 7 und gemeinsamen, diesem nachgeschalteten Vorrichtungen 34 vorgesehen sind. Die Bestandteile der in Fig. 1 linksseitig vom Auswerteteil 7 angeordneten Teilschaltung sind in Fig. 7 mit denselben Bezugszeichen versehen. Dabei sind die einzelnen Sensorelemente 11, 12... 1n in Längsrichtung des Bildsensors 1 so schmal ausgebildet, dass sie etwa der halben Abmessung der Bewerter 31, 32... 3n entsprechen. In diese Bewerter wurden der einfachen Darstellung wegen auch die Schalttransistoren T11 usw., T31 usw., T61 usw., T111 usw. sowie T151 einbezogen. Die entsprechenden Bestandteile der zweiten Schaltung nach Fig. 1 sind in Fig. 7 jeweils mit Bezugszeichen versehen, die durch einen Strich ergänzt sind. Wie ersichtlich ist, sind die Sensorelemente 12... 1n des einen Bildsensors in den Lücken zwischen den Sensorelementen 11', 12'... 1n' des anderen Bildsensors angeordnet. Die Sensorelemente sind in der Mitte geteilt, wobei ihre Teile jeweils mit einer leitenden Überbrückung, z.B. LB, miteinander verbunden sind. In den Lücken zwischen den jeweiligen Sensorelemententeilen liegen die Vergleichssensoren 111... 11m. Bei diesem Ausführungsbeispiel kann auf einer der Fig. 1 entsprechenden Sensorlänge die doppelte Anzahl von Sensorelementen untergebracht werden, so dass die Auflösung der auf die Sensorelemente projizierten Zeilenausschnitte wesentlich grösser ist als in Fig. 1. Um eine gegenseitige Störung des Informationsumlaufes in den Schieberegistern 5 und 5' zu verhindern, sind alternierend betätigbare elektronische Schalter 5c und 5c' vorgesehen, die wechselweise einen der Ausgänge 5a und 5a' mit dem einen Eingang der logischen Schaltung 8 und mit dem Eingang der betreffenden ersten Stufe 51 bzw. 51' der Schieberegister verbinden. Sie werden mittels Taktimpulsspannungen Φ6 und Φ6' angesteuert. Dabei sind die Taktperioden von Φ6 durch gleichlange Zwischenperioden voneinander getrennt. Mit diesen Zwischenperioden fallen die Taktperioden von Φ6' zeitlich zusammen. Die in Fig. 7 dargestellte Schaltung ist rechtsseitig von dem Auswerteteil 7 durch eine entsprechende Anordnung zweier weiterer Bildsensoren 2 und 2' und der ihnen zugeordneten Bewerter und Schieberegister zu ergänzen, wobei deren Sensorelemente ebenfalls so schmal ausgebildet sind, dass sie der in Längsrichtung der Bildsensoren 2 bzw. 2' gemessenen halben Bewerterbreite entsprechen.

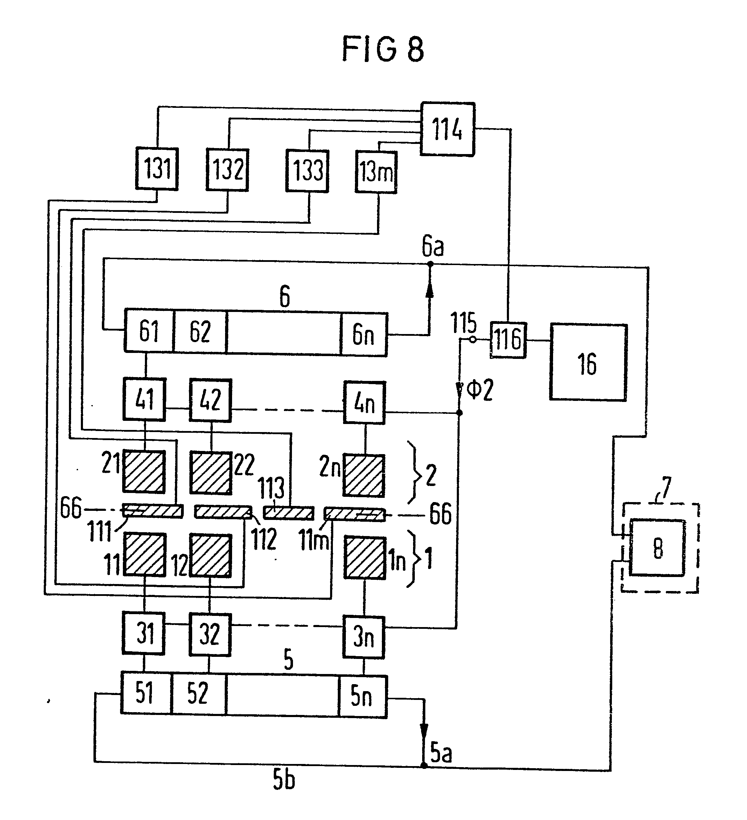

Fig. 8 zeigt schematisch eine Fig. 1 entsprechende Schaltung, bei der die Bildsensoren 1 und 2 nebeneinander angeordnet sind, so dass ihre Sensorelemente 11, 12... 1n und 21, 22... 2n in zwei nebeneinanderliegenden Zeilen angeordnet sind. Die Bewerter 31, 32... 3n und 41, 42... 4n enthalten jeweils auch die Schalttransistoren T11 usw. bis T71 usw., die Bewerter 131... 13m, die Transistoren T111 usw. und T151. Dieses Ausführungsbeispiel kann herangezogen werden, wenn die Abbildungen des Gegenstandes jeweils nur zur Hälfte auf die Ebene der Bildsensoren von 1 und 2 projiziert werden, wobei die obere Hälfte der einen Abbildung auf den Teil der Bildebene fällt, der oberhalb der Schnittlinie 66 liegt, während die untere Hälfte der anderen Abbildung auf den unterhalb der Schnittlinie 66 liegenden Teil der Bildebene projiziert wird. Die mittels der Bildsensoren 1 und 2 ausgewerteten Zeilenausschnitte liegen dabei an den jeweiligen Grenzen der Abbildungshälften, die der Linie 66 benachbart sind.

Die beschriebenen und dargestellten Schaltungen können mit besonderem Vorteil ganz oder teilweise auf einem dotierten Halbleiterkörper monolithisch integriert werden. Dabei ist der Halbleiterkörper, z.B. 58, vorzugsweise p-leitend ausgebildet und der übrige Schaltungsaufbau in MOS-n-Kanal-Technik ausgeführt. Der Halbleiterkörper liegt auf einem Bezugspotential, wobei die angegebenen Spannungen und Potentiale gegenüber diesem jeweils ein positives Vorzeichen aufweisen. Bei einem n-leitenden Halbleiterkörper und einer MOS-n-Kanal-Technik werden diese Vorzeichen negativ. Die beschriebenen und dargestellten Ausführungsbeispiele weisen im Bereich der Bildsensoren 1 und 2 Blenden auf, in denen Öffnungen vorgesehen sind, durch die eine Belichtung der Sensorelemente und der Vergleichs-Sensorelemente erfolgt.

**Patentansprüche**

1. Mit einem Belichtungsmessteil (111, T111, 131) versehene Schaltung zur sensorgesteuerten Entfernungsmessung, bei der zwei lineare, mit Sensorelementen (11... 1n, 21... 2n) bestückte, jeweils auf einem dotierten Halbleiterkörper (58) integrierte Bildsensoren (1, 2) vorgesehen sind, auf die Ausschnitte einander entsprechender Zeilen zweier von einem Gegenstand getrennt erhaltener Abbildungen projiziert werden, bei der ein Auswerteteil vorhanden ist, der die Sensorsignale in Abhängigkeit von unterschiedlichen relativen Positionsverschiebungen bezüglich einer maximalen Korrelation auswertet, bei der der Belichtungsmessteil zur Bestimmung der Integrationszeit der Sensorelemente (11... 1n, 21... 2n) dient und bei der dem Auswerteteil eine die Entfernung des Gegenstandes anzeigende Vorrichtung (34) oder eine Vorrichtung zur Scharfeinstellung der Abbildung des Gegenstandes auf eine Bildebene nachgeschaltet ist, dadurch gekennzeichnet, dass den Sensorelementen (11... 1n, 21... 2n) zur Digitalisierung der Sensorsignale dienende Bewerter (31... 3n, 41... 4n) nachgeschaltet sind, die in Abhängigkeit vom Überschreiten einer Bezugsladung in den Sensorelementen zwischen zwei unterschiedlichen Schaltzuständen umschaltbar sind, dass der Belichtungsmessteil (111, T111, 131) über streifenförmig ausgebildete Vergleichs-Sensorelemente (111... 11m) angesteuerte Bewerter (131... 13m) enthält, dass in der Umgebung mindestens eines Bildsensors (1) jeweils mehrere Vergleichs-Sensorelemente (111... 11m) angeordnet sind, deren Längsachsen nach einer parallel zum Bildsensor (1) verlaufenden Linie ausgerichtet sind, dass die Abmessungen der einzelnen Vergleichs-Sensorelemente in Längsrichtung des zugeordneten Bildsensors (1) wesentlich kleiner sind als die des Bildsensors und dass die einzelnen Vergleichs-Sensorelemente (111... 11m) über jeweils eigene Bewerter (131... 13m) an zugeordnete Eingänge einer Gatterschaltung (114) geschaltet sind, deren Ausgang (114a) den Ausgang des Belichtungsmessteils darstellt.

2. Mit einem Belichtungsmessteil versehene Schaltung zur sensorgesteuerten Entfernungsmessung, bestehend aus zwei Schaltungen nach Anspruch 1 mit einem gemeinsamen Auswerteteil, gemeinsamen, diesem nachgeschalteten Vorrichtungen und einem gemeinsamen Belichtungsmessteil, dadurch gekennzeichnet, dass einander entsprechende Bildsensoren jeweils zu einer Sensorkombination zusammengefasst sind, dass die Sensorelemente (11... 1n, 11'... 1n') jedes Bildsensors in Längsrichtung desselben so bemessen sind, dass sie etwa der halben Bewerterabmessung (31, 31') in dieser Richtung entsprechen, dass die Sensorelemente (11') eines Bildsensors jeweils in den Lücken zwischen den Sensorelementen (11, 12) des mit diesem zusammengefassten angeordnet sind und dass die Sensorelemente durch eine in Längsrichtung der Sensorkombination verlaufende Reihe von mehreren Vergleichs-Sensorelementen (111... 11m) jeweils in zwei Teile unterteilt sind, die durch eine leitende Überbrückung (LB) miteinander verbunden sind.

3. Schaltung nach Anspruch 1, dadurch gekennzeichnet, dass die beiden Bildsensoren (1, 2) parallel nebeneinander angeordnet sind und die Bewerterschaltungen (31... 3n, 41... 4n) und Schieberegister (5, 6) jeweils auf der Seite des ihnen zugeordneten Bildsensors (1, 2) liegen.

4. Schaltung nach einem der Ansprüche 1 bis 3, dadurch gekennzeichnet, dass die den Sensorelementen (11... 1n, 21... 2n) und den Vergleichs-Sensorelementen (111... 11m) nachgeschalteten Bewerter (31... 3n, 131... 13m) jeweils einen Eingang aufweisen, der über einen Schalttransistor (T11, T111) mit einer Konstantspannungsquelle ($U_{DD}$) verbunden ist.

5. Schaltung nach Anspruch 4, dadurch gekennzeichnet, dass die den Sensorelementen (11... 1n, 21... 2n) und den Vergleichs-Sensorelementen (111... 11m) nachgeschalteten Bewerter (31... 3n, 131... 13m) jeweils einen weiteren Eingang aufweisen, der über einen weiteren Schalttransistor (T51, T151) mit einer Referenzspannungsquelle ($U_{Ref}$) verbunden ist.

6 Schaltung nach einem der Ansprüche 1 bis 5, dadurch gekennzeichnet, dass die Sensorelemente (11...) und die Vergleichs-Sensorelemente (111...) als MIS-Kondensatoren (165, 166) ausgebildet sind.

7. Schaltung nach einem der Ansprüche 1 bis 5, dadurch gekennzeichnet, dass die Sensorelemente (11...) und die Vergleichs-Sensorelemente (111...) als Fotodioden (60) ausgebildet sind.

8. Schaltung nach einem der Ansprüche 1 bis 7, dadurch gekennzeichnet, dass die Sensorelemente (11...) als MIS-Kondensatoren (164) ausgebildet sind, zu denen Fotodioden (163) benachbart angeordnet sind.

9. Schaltung nach einem der Ansprüche 1 bis 7, dadurch gekennzeichnet, dass sie wenigstens teilweise auf einem dotierten Halbleiterkörper (58) monolithisch integriert ist.

10. Verwendung der Schaltung nach einem der Ansprüche 1 bis 9 in einer fotografischen oder elektronischen Kamera.

**Claims**

1. A circuit, provided with a light measuring component (111, T111, 131), for sensor-controlled distance measurement, where two linear image sensors (1, 2) equipped with sensor elements (11... 1n, 21... 2n) are provided, each integrated on a doped semi-conductor body (58), and on to which are projected mutually corresponding portions of rows of two images of an object which have been obtained separately, where an analysis component is provided which analyses the sensor signals in dependence upon different relative position displacements in relation to a maximum correlation, where the light measuring components serve to determine the integration time of the sensor elements (11... 1n, 21... 2n) and where the analysis component output is connected to a device (34) which displays the distance of the object, or to a device which serves to focus the image of the object relative to an image plane, characterised in that the sensor elements (11... 1n, 21... 2n) have their outputs connected to evaluators (31... 3n, 41... 4n) which serve to digitalise the sensor signals and which can be switched over between two different switching states in dependence upon the over-shooting of a reference charge in the sensor elements, that the light measuring component (111, T111, 131) contains evaluators (131... 13m) driven via strip-like comparator-sensor elements (111... 11m), that in the vicinity of at least one image sensor (1) there are arranged a plurality of comparator-sensor elements (111... 11m) whose longitudinal axes are aligned with a line extending parallel to the image sensor (1), that the dimensions of the individual comparator-sensor elements in the longitudinal direction of the assigned image sensor (1) are substantially smaller than those of the image sensor and that the individual comparator-sensor elements (111... 11m) are connected via individual evaluators (131... 13m) to assigned inputs of a gate circuit (114) whose output (114a) represents the output of the light measuring component.

2. A circuit with a light measuring component for sensor-controlled distance measurement, consisting of two circuits as described in Claim 1, with a common analysis component, common devices connected to this analysis component output, and a common light measuring component, characterised in that mutually corresponding image sensors are each combined to form a sensor combination, that the sensor elements (11... 1n, 11'... 1n') of each image sensor in the longitudinal direction thereof are such that they correspond to approximately half the evaluator dimensions (31, 31') in this direction, that the sensor elements (11') of an image sensor are each arranged in the gap between the other sensor elements (11, 12) of the combination, and that a plurality of comparator-sensor elements (111... 11m) extending in series in the longitudinal direction of the sensor combination divides the sensor elements into two parts connected to one another by a conductive bridge (LB).

3. A circuit as claimed in Claim 1, characterised in that the two image sensors (1, 2) are arranged in parallel and the evaluator circuits (31... 3n, 41... 4n) and shift register (5, 6) are each arranged to the side of the assigned image sensor (1, 2).

4. A circuit as claimed in one of Claims 1 to 3, characterised in that the evaluators (31... 3n, 131... 13m) connected to the outputs of the sensor elements (11... 1n, 21... 2n) and the comparator-sensor elements (111... 11m), each possess an input connected to a constant voltage source ($U_{DD}$) via a switching transistor (T11, T111).

5. A circuit as claimed in Claim 4, characterised in that the evaluators (31... 3n, 131... 13m) connected to the output end of the sensor elements (11... 1n, 21... 2n) and the comparator-sensor elements (111... 11m) each possess a further input connected to a reference voltage source ($U_{Ref}$) via a further switching transistor (T51, T151).

6. A circuit as claimed in one of Claims 1 to 5, characterised in that the sensor elements (11...) and the comparator-sensor elements (111...) consist of MIS-capacitors (165, 166).

7. A circuit as claimed in one of Claims 1 to 5, characterised in that the sensor elements (11...) and the comparator-sensor elements (111...) consist of photo-diodes (60).

8. A circuit as claimed in one of Claims 1 to 7, characterised in that the sensor elements (11...) consist of MIS-capacitors (164) adjacent to which are arranged photo-diodes (163).

9. A circuit as claimed in one of Claims 1 to 7, characterised in that it is at least partially integrated on a monolithic doped semiconductor body (58).

10. Use of a circuit as claimed in one of Claims 1 to 9 in a photographic or electronic camera.

**Revendications**

1. Circuit pour la mesure de la distance par détecteurs et pourvu d'une partie constituant un dispositif de mesure de l'exposition (111, T111, 131), du type dans lequel sont prévus deux détecteurs linéaires d'images (1, 2) garnis d'éléments-détecteurs (11... 1n, 21... 2n), respectivement intégrés sur un corps semiconducteur dopé (58) et sur lesquels sont projetées des sections de deux lignes correspondantes de deux images d'un objet, obtenues séparément, dans lequel est prévue une partie constituée en dispositif d'évaluation qui évalue les signaux des détecteurs en fonction de décalages des positions, relatifs et différents, par rapport à une corrélation maximale, dans lequel la partie constituée en dispositif de mesure de l'exposition sert à déterminer la durée d'intégration des éléments-détecteurs (11... 1n, 21... 2n), et dans lequel il est prévu, en aval de la partie constituant dispositif d'évaluation, un dispositif (34) indiquant la distance de l'objet ou un dispositif pour la mise au point de l'image de l'objet dans un plan d'image, caractérisé par le fait qu'en aval des éléments-détecteurs (11... 1n, 21... 2n) sont montés, pour la numérisation des signaux des détecteurs, des dispositifs d'évaluation (31... 3n, 41... 4n) qui sont, en fonction du dépassement d'une charge de référence dans les éléments-détecteurs, susceptibles d'être commutés entre deux états de commutation, que la partie constituant dispositif de mesure de l'exposition (111, T111, 131) comporte des dispositifs d'évaluation (131... 13m) attaqués par l'intermédiaire d'éléments détecteurs de comparaison réalisés en forme de bandes, que dans l'environnement d'au moins un détecteur d'image (1) sont disposés respectivement plusieurs éléments-détecteurs de comparaison (111... 11m) dont les axes longitudinaux sont alignés suivant une droite s'étendant parallèlement au détecteur d'image (1), que les dimensions des différents éléments-détecteurs de comparaison sont, dans le sens longitudinal du détecteur d'image associé (1), notablement plus petites que celles du détecteur d'image et que les différents éléments-détecteurs de comparaison (111... 11m) sont reliés par respectivement un dispositif d'évaluation qui leur est propre (131... 13m), à des entrées associées d'un circuit de porte (114) dont la sortie (114a) représente la sortie de la partie constituant dispositif de mesure de l'exposition.

2. Circuit pour la mesure de la distance à commande par détecteurs et pourvu d'une partie constituant dispositif de mesure de l'exposition, constitué par deux circuits selon la revendication 1 avec une partie commune d'évaluation, avec des dispositifs communs montés en aval de ladite partie et avec une partie commune constituant dispositif de mesure de l'exposition, caractérisé par le fait que des détecteurs d'images qui se correspondent sont assemblés en une combinaison de détecteurs, que les éléments-détecteurs (11... 1n, 11'... 1n') de chaque détecteur d'image sont dimensionnés, dans le sens longitudinal de ce dernier détecteur d'image, de façon à correspondre dans cette direction à peu près à la moitié de la dimension des dispositifs d'évaluation (31, 31'), que les éléments-détecteurs (11') d'un détecteur d'image sont respectivement disposés dans les intervalles entre les éléments-détecteurs (11, 12) assemblés avec celui-ci, et que les éléments-détecteurs sont subdivisés par une rangée de plusieurs éléments-détecteurs de comparaison (111... 11m), s'étendant dans le sens longitudinal de la combinaison de détecteurs, respectivement en deux parties qui sont reliées entre elles par un shunt conducteur (LB).

3. Circuit selon la revendication 1, caractérisé par le fait que les deux détecteurs d'images (1, 2) sont disposés parallèlement l'un à côté de l'autre et que les circuits d'évaluation (31... 3n, 41... 4n) ainsi que des registres à décalage (5, 6) sont respectivement situés du côté du détecteur d'image (1, 2) qui leur est associé.

4. Circuit selon l'une des revendications 1 à 3, caractérisé par le fait que les dispositifs d'évaluation (31... 3n, 131... 13m), qui sont montés en aval des éléments-détecteurs (11... 1n, 21... 2n) et des éléments-détecteurs de comparaison (111... 11m), comportent chacun une entrée qui est reliée, par l'intermédiaire d'un transistor de commutation (T11, T111), à une source de tension constante (U$_{DD}$).

5. Circuit selon la revendication 4, caractérisé par le fait que les dispositifs d'évaluation (31... 3n, 131... 13m), qui sont montés en aval des éléments-détecteurs (11... 1n, 21... 2n) et des éléments-détecteurs de comparaison (111... 11m), comportent chacun une seconde entrée qui est reliée, par l'intermédiaire d'un second transistor de commutation (T51, T151), à une source de tension de référence (U$_{Ref}$).

6. Circuit selon l'une des revendications 1 à 5, caractérisé par le fait que les éléments-détecteurs (11...) et les éléments-détecteurs de comparaison (111...) sont réalisés sous la forme de condensateurs MIS (165, 166).

7. Circuit selon l'une des revendications 1 à 5, caractérisé par le fait que les éléments-détecteurs (11...) et les éléments-détecteurs de comparaison (111...) sont réalisés sous la forme de photodiodes (60).

8. Circuit selon l'une des revendications 1 à 7, caractérisé par le fait que les éléments-détecteurs (11...) sont réalisés sous la forme de condensateurs MIS (164), dans le voisinage desquels sont disposées des photodiodes (163).

9. Circuit selon l'une des revendications 1 à 7, caractérisé par le fait qu'il est intégré monolithiquement, et au moins partiellement sur un corps semiconducteur dopé.

10. Mise en œuvre du circuit selon l'une des revendications 1 à 9, dans une caméra photographique ou électronique.

FIG 1

0 025 175

# FIG 2

FIG 3

FIG 4

FIG 5

FIG 6

# FIG 7

## FIG 8